# EUROPEAN PATENT APPLICATION

(11) **EP 4 757 457 A1**
(43) Date of publication of application: **10.06.2026**
(21) Application number: 24858338.7
(22) Date of filing: 16.08.2024
(51) Int. Cl.: H04W 72/0453

(54) **MICROWAVE COMMUNICATION SYSTEM AND MICROWAVE APPARATUS**

(30) Priority: 30.08.2023 CN 202311111818
(71) Applicant: HUAWEI TECHNOLOGIES CO., LTD., Shenzhen, Guangdong 518129 (CN)
(72) Inventor: XIE, Yongfeng, Shenzhen, Guangdong 518129 (CN); JI, Kuiwen, Shenzhen, Guangdong 518129 (CN); LI, Hai, Shenzhen, Guangdong 518129 (CN); LIU, Yue, Shenzhen, Guangdong 518129 (CN); GUO, Liwen, Shenzhen, Guangdong 518129 (CN)
(74) Representative: Isarpatent
(86) International application number: PCT/CN2024/112665
(87) International publication number: WO 2025/044795

(57) **Abstract**

This application discloses a microwave communication system. The microwave communication system includes a first apparatus and a second apparatus, where the first apparatus includes a plurality of antennas, and the second apparatus includes a plurality of antennas. The first apparatus is configured to send carrier signals of at least two frequencies through at least two antennas of the plurality of antennas, and each of the at least two antennas corresponds to a carrier signal of at least one frequency. The second apparatus is configured to receive the carrier signals of the at least two frequencies through at least two antennas of the plurality of antennas, and each of the at least two antennas receives the carrier signals of the at least two frequencies. In the solution of this application, a transmit end does not need to send all carrier signals through one antenna. Therefore, power back-off is not required, or the carrier signals can be sent with a small amount of power back-off, thereby reducing a combination loss when the microwave communication system performs transmission of the carrier signals and improving a gain of the microwave communication system.

## Description

This application claims priority to Chinese Patent Application No. 202311111818.6, filed with the China National Intellectual Property Administration on August 30, 2023 and entitled "MICROWAVE COMMUNICATION SYSTEM AND MICROWAVE APPARATUS", which is incorporated herein by reference in its entirety.

### TECHNICAL FIELD

This application relates to the field of communication technologies, and specifically, to a microwave communication system and a microwave apparatus.

### BACKGROUND

With increasing service requirements in a wireless communication system, a capacity of a long-distance microwave transmission service is also increasing, and more frequency spectrum channels are required for service transmission. At present, after being combined, carrier signals of frequency spectrum channels are sent through a same antenna, and a receive end receives the carrier signals through two antennas. In this way, a problem of multipath fading can be resolved.

Although the problem of multipath fading can be resolved to some extent by sending combined carrier signals through an antenna and then receiving the combined signals through two antennas, combining a plurality of carrier signals during sending may cause a severe combination loss, affecting a gain of a microwave communication system.

### SUMMARY

This application provides a microwave communication system and a microwave apparatus, to reduce a combination loss when the microwave communication system performs transmission of carrier signals, and improve a gain of the microwave communication system.

According to a first aspect of this application, a microwave communication system is provided, including a first apparatus and a second apparatus. The first apparatus includes a plurality of antennas, and the second apparatus includes a plurality of antennas. The first apparatus is configured to send carrier signals of at least two frequencies through at least two antennas of the plurality of antennas, and each of the at least two antennas corresponds to a carrier signal of at least one frequency. The second apparatus is configured to receive the carrier signals of the at least two frequencies through at least two antennas of the plurality of antennas, and each of the at least two antennas receives the carrier signals of the at least two frequencies.

In this application, a quantity of antennas may be represented via the term "quantity", or may be represented via the term "plane". The two terms have a same meaning.

In this application, both the first apparatus and the second apparatus are microwave apparatuses, and both the first apparatus and the second apparatus have a carrier signal sending function and a carrier signal receiving function. The microwave communication system may be a system formed by microwave apparatuses through microwave communication, or may be a communication system including microwave apparatuses, an access network apparatus, a core network, and a terminal device.

In this application, sending the carrier signals of the at least two frequencies through the at least two antennas may be that one antenna sends a carrier signal of one frequency, or may be that each antenna sends carrier signals of two or more different frequencies if there are a large quantity of carrier signals of different frequencies and a small quantity of antennas.

In this application, a case in which each antenna of the second apparatus receives the carrier signals of the at least two frequencies indicates that each antenna of the second apparatus receives all carrier signals sent by the first apparatus.

According to the microwave communication system provided in this application, a transmit end sends carrier signals of at least two frequencies through at least two antennas. In this way, the transmit end does not need to send all carrier signals through one antenna. Therefore, power back-off is not required, or the carrier signals can be sent with a small amount of power back-off, thereby reducing a combination loss when the microwave communication system performs transmission of the carrier signals. In addition, each of a plurality of antennas at a receive end receives all the carrier signals sent by the transmit end, and the signals received by each antenna are the same. Therefore, the receive end has a space diversity capability, and a signal gain of the microwave communication system is improved.

In a possible implementation, both the first apparatus and the second apparatus further include a plurality of transceiver lines. At least two transceiver lines of the plurality of transceiver lines share a combiner unit. Each of the plurality of antennas corresponds to at least one transceiver line, the antenna is connected to the corresponding transceiver line, and the transceiver line is configured to send a carrier signal to the antenna or receive a carrier signal from the antenna. Each transceiver line is configured to send a carrier signal of a frequency, or receive carrier signals of at least two frequencies. The combiner unit is configured to separate the carrier signals of the at least two frequencies on a target transceiver line, where the target transceiver line is a transceiver line that shares the combiner unit.

In this possible implementation, carrier signals of different frequencies are sent to the antennas through the transceiver lines, and carrier signals of at least two frequencies on each transceiver line are separated through the combiner unit, so that a combination loss in a sending process can be reduced, and a signal gain in a receiving process can be improved.

In a possible implementation, each transceiver line includes a baseband, the shared combiner unit, a radio frequency sending unit, a receiving unit, and a transceiver control unit. The transceiver control unit is connected to an antenna corresponding to the transceiver line on which the transceiver control unit is located, the transceiver control unit is separately connected to the radio frequency sending unit and the receiving unit, and the transceiver control unit is configured to control the transceiver line for sending or receiving. The combiner unit is separately connected to the baseband and the receiving unit on the transceiver line that shares the combiner unit. The baseband is connected to the radio frequency sending unit.

In this possible implementation, the transceiver control unit may be a switch or a filter, and may control the transceiver line to send a carrier signal to the antenna or control the transceiver line to receive a carrier signal from the antenna.

In a possible implementation, in a single-polarization scenario, each antenna corresponds to a transceiver line of one polarization type.

In this possible implementation, one polarization type may be understood as that no polarization processing is performed on a carrier signal.

In a possible implementation, in a dual-polarization scenario, each antenna corresponds to transceiver lines of two polarization types.

In this possible implementation, the two polarization types may be that horizontal and vertical polarization processing is performed on a carrier signal, or may be that +45° or -45° polarization processing is performed on a carrier signal.

In a possible implementation, the plurality of transceiver lines are included in at least two line groups, where each line group includes at least two transceiver lines respectively, and the at least two transceiver lines in a same line group share a combiner unit. Transceiver lines in the same line group are configured to send carrier signals of different frequencies in a same polarization direction, or receive carrier signals of at least two frequencies in a same polarization direction. Carrier signals on transceiver lines in different line groups have different polarization directions.

In this possible implementation, carrier signals of different frequencies in a same polarization direction may be sent in a same line group, and carrier signals in different polarization directions may be sent in different line groups, thereby reducing complexity of polarization processing on the carrier signals.

In a possible implementation, the at least two line groups include a first line group and a second line group. The first line group includes a first transceiver line, and the second line group includes a second transceiver line. A cross-polarization interference counteracter is arranged between a baseband of the first transceiver line and a baseband of the second transceiver line. An orthomode transducer is configured for antennas corresponding to the first transceiver line and the second transceiver line, the orthomode transducer is separately connected to the first transceiver line and the second transceiver line through a radio frequency cable, and a distance between the first transceiver line and the second transceiver line is greater than a first threshold. Carrier signals sent on the first transceiver line and the second transceiver line have a same frequency but different polarization directions. Carrier signals of at least two frequencies received on the first transceiver line and the second transceiver line have different polarization directions.

In this possible implementation, the distance between the first transceiver line and the second transceiver line is greater than the first threshold, so that multipath impact can be reduced.

In a possible implementation, the plurality of transceiver lines are included in at least two line groups, where each line group includes at least two transceiver lines respectively, and at least two transceiver lines in different line groups share a combiner unit. Different transceiver lines in a same line group are configured to send carrier signals of a same frequency in different polarization directions, or receive carrier signals of at least two frequencies in different polarization directions.

In this possible implementation, carrier signals in different polarization directions may be sent in the same line group, so that a degree of freedom of sending the carrier signals can be improved.

In a possible implementation, the at least two line groups include a third line group and a fourth line group. The third line group includes a third transceiver line and a fourth transceiver line, and the fourth line group includes a fifth transceiver line. A cross-polarization interference counteracter is arranged between a baseband of the third transceiver line and a baseband of the fifth transceiver line. An orthomode transducer is configured for antennas corresponding to the third transceiver line and the fourth transceiver line, the orthomode transducer is connected to the third transceiver line and the fourth transceiver line through a radio frequency cable, and a distance between the third transceiver line and the fourth transceiver line is less than a second threshold. A combiner unit in the third line group is connected the baseband of the third transceiver line and a baseband of the fourth transceiver line, and is connected to a receiving unit of the third transceiver line and a receiving unit of the fifth transceiver line through an intermediate frequency cable or a digital cable. The combiner unit in the third line group is configured to separate carrier signals of at least two frequencies in a same polarization direction that are received by the third transceiver line, and separate carrier signals of at least two frequencies in a same polarization direction that are received by the fifth transceiver line. A polarization direction of the carrier signals of the at least two frequencies that are received by the third transceiver line is the same as a polarization direction of the carrier signals of the at least two frequencies that are received by the fifth transceiver line.

In this possible implementation, the distance between the third transceiver line and the fourth transceiver line is less than the second threshold, so that usage of the radio frequency cable can be reduced. The receiving unit of the third transceiver line and the receiving unit of the fifth transceiver line are connected through the intermediate frequency cable or the digital cable, so that carrier signals of a same frequency in different polarization directions may also be transmitted to a same antenna, and no radio frequency cable is required for mutual transmission, thereby reducing the usage of the radio frequency cable and reducing an insertion loss caused by using a long radio frequency cable.

In a possible implementation, each transceiver line includes a radio frequency segment, an analog intermediate frequency segment, and a digital baseband segment, and the combiner unit is located in the analog intermediate frequency segment or the digital baseband segment.

In this possible implementation, when the combiner unit is located in the digital baseband segment, difficulty in implementing an analog circuit can be reduced.

According to a second aspect of this application, a microwave apparatus is provided, including a plurality of transceiver lines and a plurality of antennas, where each of the plurality of antennas corresponds to at least one transceiver line, the antenna is connected to the corresponding transceiver line, and the transceiver line is configured to send a carrier signal to the antenna or receive a carrier signal from the antenna; when sending carrier signals, at least two antennas of the plurality of antennas send carrier signals of at least two frequencies, and each of the at least two antennas corresponds to a carrier signal of at least one frequency; and when receiving carrier signals, at least two antennas of the plurality of antennas receive the carrier signals of the at least two frequencies, where each of the at least two antennas receives the carrier signals of the at least two frequencies.

In a possible implementation, at least two transceiver lines of the plurality of transceiver lines share a combiner unit, each of the plurality of antennas corresponds to at least one transceiver line, and the antenna is connected to the corresponding transceiver line. Each transceiver line is configured to send a carrier signal of a frequency, or receive carrier signals of at least two frequencies. The combiner unit is configured to separate the carrier signals of the at least two frequencies on a target transceiver line, where the target transceiver line is a transceiver line that shares the combiner unit.

In a possible implementation, each transceiver line includes a baseband, the shared combiner unit, a radio frequency sending unit, a receiving unit, and a transceiver control unit. The transceiver control unit is connected to an antenna corresponding to the transceiver line on which the transceiver control unit is located, the transceiver control unit is separately connected to the radio frequency sending unit and the receiving unit, and the transceiver control unit is configured to control the transceiver line for sending or receiving. The combiner unit is separately connected to the baseband and the receiving unit on the transceiver line that shares the combiner unit. The baseband is connected to the radio frequency sending unit.

In a possible implementation, in a single-polarization scenario, each antenna corresponds to a transceiver line of one polarization type.

In a possible implementation, in a dual-polarization scenario, each antenna corresponds to transceiver lines of two polarization types.

In a possible implementation, the plurality of transceiver lines are included in at least two line groups, where each line group includes at least two transceiver lines respectively, and the at least two transceiver lines in a same line group share a combiner unit. Transceiver lines in the same line group are configured to send carrier signals of different frequencies in a same polarization direction, or receive carrier signals of at least two frequencies in a same polarization direction. Carrier signals on transceiver lines in different line groups have different polarization directions.

In a possible implementation, the at least two line groups include a first line group and a second line group. The first line group includes a first transceiver line, and the second line group includes a second transceiver line. A cross-polarization interference counteracter is arranged between a baseband of the first transceiver line and a baseband of the second transceiver line. An orthomode transducer is configured for antennas corresponding to the first transceiver line and the second transceiver line, the orthomode transducer is separately connected to the first transceiver line and the second transceiver line through a radio frequency cable, and a distance between the first transceiver line and the second transceiver line is greater than a first threshold. Carrier signals sent on the first transceiver line and the second transceiver line have a same frequency but different polarization directions. Carrier signals of at least two frequencies received on the first transceiver line and the second transceiver line have different polarization directions.

In a possible implementation, the plurality of transceiver lines are included in at least two line groups, where each line group includes at least two transceiver lines respectively, and at least two transceiver lines in different line groups share a combiner unit. Different transceiver lines in a same line group are configured to send carrier signals of a same frequency in different polarization directions, or receive carrier signals of at least two frequencies in different polarization directions.

In a possible implementation, the at least two line groups include a third line group and a fourth line group. The third line group includes a third transceiver line and a fourth transceiver line, and the fourth line group includes a fifth transceiver line. A cross-polarization interference counteracter is arranged between a baseband of the third transceiver line and a baseband of the fifth transceiver line. An orthomode transducer is configured for antennas corresponding to the third transceiver line and the fourth transceiver line, the orthomode transducer is connected to the third transceiver line and the fourth transceiver line through a radio frequency cable, and a distance between the third transceiver line and the fourth transceiver line is less than a second threshold. A combiner unit in the third line group is connected the baseband of the third transceiver line and a baseband of the fourth transceiver line, and is connected to a receiving unit of the third transceiver line and a receiving unit of the fifth transceiver line through an intermediate frequency cable or a digital cable. The combiner unit in the third line group is configured to separate carrier signals of at least two frequencies in a same polarization direction that are received by the third transceiver line, and separate carrier signals of at least two frequencies in a same polarization direction that are received by the fifth transceiver line. A polarization direction of the carrier signals of the at least two frequencies that are received by the third transceiver line is the same as a polarization direction of the carrier signals of the at least two frequencies that are received by the fifth transceiver line.

In a possible implementation, each transceiver line includes a radio frequency segment, an analog intermediate frequency segment, and a digital baseband segment, and the combiner unit is located in the analog intermediate frequency segment or the digital baseband segment.

In this application, for technical effects of the second aspect and any possible implementation of the second aspect, refer to technical effects of the first aspect and any possible implementation of the first aspect for understanding.

### BRIEF DESCRIPTION OF DRAWINGS

FIG. 1 is a diagram of an architecture of a microwave communication system according to an embodiment of this application;
FIG. 2 is a diagram of another architecture of a microwave communication system according to an embodiment of this application;
FIG. 3 is a diagram of structures of microwave apparatuses and an architecture of a microwave communication system according to an embodiment of this application;
FIG. 4 is a diagram of structures of microwave apparatuses and another architecture of a microwave communication system according to an embodiment of this application;
FIG. 5 is a diagram of structures of microwave apparatuses and another architecture of a microwave communication system according to an embodiment of this application; and
FIG. 6 is a diagram of structures of microwave apparatuses and another architecture of a microwave communication system according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, technical solutions provided in embodiments of this application are also applicable to a similar technical problem.

In the specification, claims, and accompanying drawings of this application, the terms "first", "second", and the like are intended to distinguish between similar objects but do not necessarily describe a specific order or sequence. It should be understood that data used in such a way is interchangeable in appropriate circumstances, so that embodiments described herein can be implemented in other orders than the order illustrated or described herein. In addition, the terms "include", "have" and any variant thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.

Embodiments of this application provide a microwave communication system and a microwave apparatus, to reduce a combination loss when the microwave communication system performs transmission of carrier signals, and improve a gain of the microwave communication system. Details are separately described below.

For ease of understanding embodiments of this application, the following first briefly describes several terms in this application.
1. Microwave communication (microwave communication): The microwave communication refers to a manner in which microwave is used as a carrier to carry information for relay communication, where the microwave is an electromagnetic wave with a wavelength ranging from 0.1 m to 1 m and a frequency ranging from 300 MHz to 3000 GHz. Different from modern communication network transmission manners such as coaxial cable communication, optical fiber communication, and satellite communication, the microwave communication directly uses the microwave as a medium for communication and does not require a solid medium. The microwave can be used for communication between two points when there is no obstacle between the two points in a straight line. The microwave communication has characteristics of large capacity, good quality, and long-distance transmission.
2. Antenna: The antenna is an indispensable part in mobile communication and plays an extremely important role. The antenna is located between a transceiver and electromagnetic wave propagation space, and implements effective energy transfer between the transceiver and the electromagnetic wave propagation space. By designing a radiation characteristic of the antenna, spatial distribution of electromagnetic energy can be controlled, resource utilization can be improved, and network quality can be optimized. Due to a propagation environment, a carrier signal may generate deep fading and a Doppler frequency shift. As a result, a receive level decreases close to a thermal noise level, and a phase changes randomly with time, deteriorating communication quality. In this case, a diversity receiving technology can be used to reduce impact of fading, obtain a diversity gain, and improve receiver sensitivity. A diversity antenna has space diversity, direction diversity, polarization diversity, and field component diversity.
3. Space diversity (space diversity, SD): The SD is also referred to as antenna diversity, which is implemented through a plurality of receive antennas. Diversity receiving is performed through the receive antennas at different locations, and the SD is one of diversity forms used in wireless communication. A basic principle of diversity is that a plurality of copies carrying same information are received through a plurality of channels (time, frequency, or space). Because transmission characteristics of the plurality of channels are different, fading of the plurality of copies of a signal is different. A receiver can accurately restore an original sent signal by using the information included in the plurality of copies. If a diversity technology is not used, a transmitter needs to send high power when noise is limited, to ensure a normal link connection when a channel condition is poor.
4. Baseband: The baseband is configured to modulate and demodulate a signal.

The microwave communication system and the microwave apparatus in embodiments of this application may be used in various communication systems such as satellite communication, a 5th generation (5th generation, 5G) system or new radio (new radio, NR), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after a 5G network (for example, a 6G mobile communication system), a vehicle-to-everything (vehicle-to-everything, V2X) communication system, and the like.

An embodiment of this application provides a microwave communication system, including a first apparatus and a second apparatus. The first apparatus includes a plurality of antennas, and the second apparatus includes a plurality of antennas. The first apparatus is configured to send carrier signals of at least two frequencies through at least two antennas of the plurality of antennas, and each of the at least two antennas corresponds to a carrier signal of at least one frequency. The second apparatus is configured to receive the carrier signals of the at least two frequencies through at least two antennas of the plurality of antennas, and each of the at least two antennas receives the carrier signals of the at least two frequencies.

Both the first apparatus and the second apparatus are microwave apparatuses, and both the first apparatus and the second apparatus have a carrier signal sending function and a carrier signal receiving function. The microwave communication system may be a system formed by microwave apparatuses through microwave communication, or may be a communication system including microwave apparatuses, an access network apparatus, a core network, and a terminal device.

Sending the carrier signals of the at least two frequencies through the at least two antennas may be that one antenna sends a carrier signal of one frequency, or may be that each antenna sends carrier signals of two or more different frequencies if there are a large quantity of carrier signals of different frequencies and a small quantity of antennas.

A case in which each antenna of the second apparatus receives the carrier signals of the at least two frequencies indicates that each antenna of the second apparatus receives all carrier signals sent by the first apparatus.

According to the microwave communication system provided in this embodiment of this application, a transmit end sends carrier signals of at least two frequencies through at least two antennas. In this way, the transmit end does not need to send all carrier signals through one antenna. Therefore, power back-off is not required, or the carrier signals can be sent with a small amount of power back-off, thereby reducing a combination loss when the microwave communication system performs transmission of the carrier signals. In addition, each of a plurality of antennas at a receive end receives all the carrier signals sent by the transmit end, and the signals received by each antenna are the same. Therefore, the receive end has a space diversity capability, and a gain of the microwave communication system is improved.

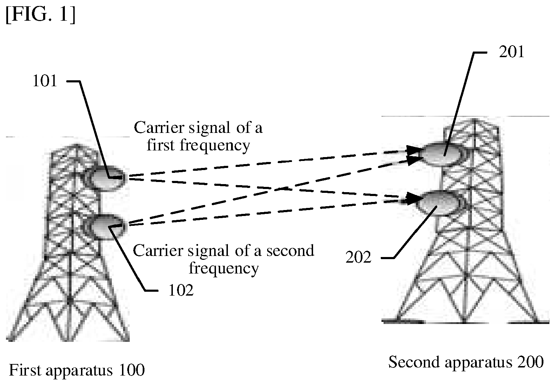

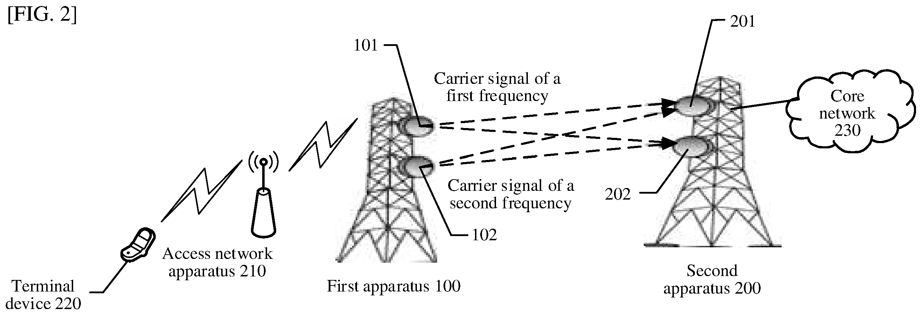

For the microwave communication system formed by mutual communication between microwave apparatuses provided in this embodiment of this application, refer to an example in FIG. 1 for understanding. In addition, for a microwave communication system including microwave apparatuses, an access network apparatus, a core network, and a terminal device, refer to an example in FIG. 2 for understanding.

As shown in FIG. 1, the microwave communication system includes a first apparatus 100 and a second apparatus 200. The first apparatus includes an antenna 101 and an antenna 102, and the second apparatus includes an antenna 201 and an antenna 202. In FIG. 1, an example in which two antennas are arranged on both the first apparatus 100 and the second apparatus 200 is used for description. Actually, more antennas may be arranged on both the first apparatus 100 and the second apparatus 200. Both the first apparatus 100 and the second apparatus 200 are microwave apparatuses.

The antenna 101 of the first apparatus 100 may send a carrier signal of a first frequency, and the antenna 102 may send a carrier signal of a second frequency. The carrier signals of the two frequencies are transmitted in space in a microwave form. The antenna 201 of the second apparatus 200 may receive the carrier signal of the first frequency and the carrier signal of the second frequency, and the antenna 202 may also receive the carrier signal of the first frequency and the carrier signal of the second frequency, where the first frequency is different from the second frequency.

As shown in FIG. 2, the microwave communication system includes a first apparatus 100, a second apparatus 200, an access network apparatus 210, a terminal device 220, and a core network 230. The first apparatus includes an antenna 101 and an antenna 102, and the second apparatus includes an antenna 201 and an antenna 202. In FIG. 2, an example in which two antennas are arranged on both the first apparatus 100 and the second apparatus 200 is used for description. Actually, more antennas may be arranged on both the first apparatus 100 and the second apparatus 200. Both the first apparatus 100 and the second apparatus 200 are microwave apparatuses. The first apparatus 100 and the second apparatus 200 may perform transmission of, in a microwave communication manner, data transmitted by the access network apparatus 210 to the core network 230, and may further perform transmission of data transmitted by the core network 230 to the access network apparatus 210.

The antenna 101 of the first apparatus 100 may send a carrier signal of a first frequency, and the antenna 102 may send a carrier signal of a second frequency. The carrier signals of the two frequencies are transmitted in space in a microwave form. The antenna 201 of the second apparatus 200 may receive the carrier signal of the first frequency and the carrier signal of the second frequency, and the antenna 202 may also receive the carrier signal of the first frequency and the carrier signal of the second frequency, where the first frequency is different from the second frequency.

Certainly, the microwave communication system may alternatively be a communication system in another architecture form. However, no matter which form of communication system is used, a communication process between the first apparatus and the second apparatus may be applicable to a corresponding communication system.

In the microwave communication system provided in this embodiment of this application, both the first apparatus and the second apparatus further include a plurality of transceiver lines. At least two transceiver lines of the plurality of transceiver lines share a combiner unit. Each of the plurality of antennas corresponds to at least one transceiver line, the antenna is connected to the corresponding transceiver line, and the transceiver line is configured to send a carrier signal to the antenna or receive a carrier signal from the antenna. Each transceiver line is configured to send a carrier signal of a frequency, or receive carrier signals of at least two frequencies. The combiner unit is configured to separate the carrier signals of the at least two frequencies on a target transceiver line, where the target transceiver line is a transceiver line that shares the combiner unit.

Each transceiver line includes a baseband, the shared combiner unit, a radio frequency sending unit, a receiving unit, and a transceiver control unit. The transceiver control unit is connected to an antenna corresponding to the transceiver line on which the transceiver control unit is located, the transceiver control unit is separately connected to the radio frequency sending unit and the receiving unit, and the transceiver control unit is configured to control the transceiver line for sending or receiving. The combiner unit is separately connected to the baseband and the receiving unit on the transceiver line that shares the combiner unit. The baseband is connected to the radio frequency sending unit.

The transceiver control unit may be a switch or a filter, and may control the transceiver line to send a carrier signal to the antenna or control the transceiver line to receive a carrier signal from the antenna.

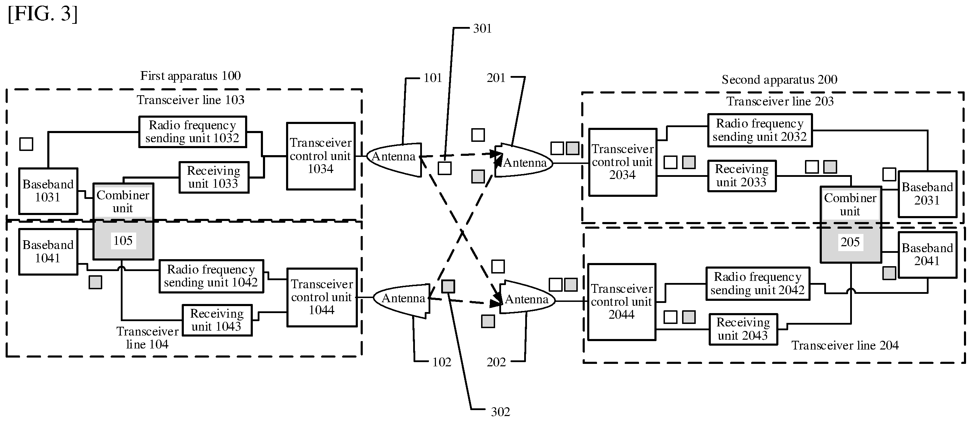

For structures of the first apparatus and the second apparatus that are used as microwave apparatuses, and the communication process between the first apparatus and the second apparatus, refer to FIG. 3 for understanding.

As shown in FIG. 3, the microwave communication system includes a first apparatus 100 and a second apparatus 200. The first apparatus 100 includes an antenna 101, an antenna 102, a transceiver line 103, and a transceiver line 104, where the transceiver line 103 and the transceiver line 104 share a combiner unit 105. In an architecture shown in FIG. 3, the antenna 101 corresponds to the transceiver line 103, and the antenna 102 corresponds to the transceiver line 104. The second apparatus 200 includes an antenna 201, an antenna 202, a transceiver line 203, and a transceiver line 204, where the transceiver line 203 and the transceiver line 204 share a combiner unit 205. In the architecture shown in FIG. 3, the antenna 201 corresponds to the transceiver line 203, and the antenna 202 corresponds to the transceiver line 204.

The transceiver line 103 includes a baseband 1031, the shared combiner unit 105, a radio frequency sending unit 1032, a receiving unit 1033, and a transceiver control unit 1034. The baseband 1031 is separately connected to the combiner unit 105 and the radio frequency sending unit 1032, the combiner unit 105 is connected to the receiving unit 1033, the receiving unit 1033 is connected to the transceiver control unit 1034, the radio frequency sending unit 1032 is also connected to the transceiver control unit 1034, and the transceiver control unit 1034 is connected to the antenna 101.

The transceiver line 104 includes a baseband 1041, the shared combiner unit 105, a radio frequency sending unit 1042, a receiving unit 1043, and a transceiver control unit 1044. The baseband 1041 is separately connected to the combiner unit 105 and the radio frequency sending unit 1042, the combiner unit 105 is connected to the receiving unit 1043, the receiving unit 1043 is connected to the transceiver control unit 1044, the radio frequency sending unit 1042 is also connected to the transceiver control unit 1044, and the transceiver control unit 1044 is connected to the antenna 102.

The transceiver line 203 includes a baseband 2031, the shared combiner unit 205, a radio frequency sending unit 2032, a receiving unit 2033, and a transceiver control unit 2034. The baseband 2031 is separately connected to the combiner unit 205 and the radio frequency sending unit 2032, the combiner unit 205 is connected to the receiving unit 2033, the receiving unit 2033 is connected to the transceiver control unit 2034, the radio frequency sending unit 2032 is also connected to the transceiver control unit 2034, and the transceiver control unit 2034 is connected to the antenna 201.

The transceiver line 204 includes a baseband 2041, the shared combiner unit 205, a radio frequency sending unit 2042, a receiving unit 2043, and a transceiver control unit 2044. The baseband 2041 is separately connected to the combiner unit 205 and the radio frequency sending unit 2042, the combiner unit 205 is connected to the receiving unit 2043, the receiving unit 2043 is connected to the transceiver control unit 2044, the radio frequency sending unit 2042 is also connected to the transceiver control unit 2044, and the transceiver control unit 2044 is connected to the antenna 202.

The transceiver line 103 may send a carrier signal 301 of a first frequency through the antenna 101, and the transceiver line 104 may send a carrier signal 302 of a second frequency through the antenna 102. Correspondingly, the antenna 201 receives the carrier signal 301 of the first frequency and the carrier signal 302 of the second frequency, and the antenna 202 also receives the carrier signal 301 of the first frequency and the carrier signal 302 of the second frequency.

A process in which the carrier signal 301 of the first frequency and the carrier signal 302 of the second frequency are sent from the first apparatus 100 to be received by the second apparatus 200 may be as follows:

The baseband 1031 modulates the to-be-sent carrier signal 301 of the first frequency, and then transmits the carrier signal 301 of the first frequency to the radio frequency sending unit 1032. The radio frequency sending unit 1032 transmits the carrier signal 301 of the first frequency to the transceiver control unit 1034. The transceiver control unit 1034 transmits the carrier signal 301 of the first frequency to the antenna 101, and the antenna 101 sends the carrier signal 301 of the first frequency.

The baseband 1041 modulates the to-be-sent carrier signal 302 of the second frequency, and then transmits the carrier signal 302 of the second frequency to the radio frequency sending unit 1042. The radio frequency sending unit 1042 transmits the carrier signal 302 of the second frequency to the transceiver control unit 1044. The transceiver control unit 1044 transmits the carrier signal 302 of the second frequency to the antenna 102, and the antenna 102 sends the carrier signal 302 of the second frequency.

The antenna 201 receives the carrier signal 301 of the first frequency and the carrier signal 302 of the second frequency. Then, the antenna 201 transmits the carrier signal 301 of the first frequency and the carrier signal 302 of the second frequency to the transceiver control unit 2034. The transceiver control unit 2034 transmits the carrier signal 301 of the first frequency and the carrier signal 302 of the second frequency to the receiving unit 2033. The receiving unit 2033 transmits the carrier signal 301 of the first frequency and the carrier signal 302 of the second frequency to the combiner unit 205. The combiner unit 205 may separate the carrier signal 301 of the first frequency from the carrier signal 302 of the second frequency, transmit the carrier signal 301 of the first frequency to the baseband 2031 for demodulation, and transmit the carrier signal 302 of the second frequency to the baseband 2041 for demodulation.

Similarly, the antenna 202 receives the carrier signal 301 of the first frequency and the carrier signal 302 of the second frequency. Then, the antenna 202 transmits the carrier signal 301 of the first frequency and the carrier signal 302 of the second frequency to the transceiver control unit 2044. The transceiver control unit 2044 transmits the carrier signal 301 of the first frequency and the carrier signal 302 of the second frequency to the receiving unit 2043. The receiving unit 2043 transmits the carrier signal 301 of the first frequency and the carrier signal 302 of the second frequency to the combiner unit 205. The combiner unit 205 may separate the carrier signal 301 of the first frequency from the carrier signal 302 of the second frequency, transmit the carrier signal 301 of the first frequency to the baseband 2031 for demodulation, and transmit the carrier signal 302 of the second frequency to the baseband 2041 for demodulation.

The foregoing describes a communication process in which the first apparatus 100 is used as a transmit end and the second apparatus 200 is used as a receive end. On the contrary, if the second apparatus 200 is used as a transmit end and the first apparatus 100 is used as a receive end, refer to the foregoing process, but a sending process occurs in the second apparatus 200, and a receiving process occurs in the first apparatus 100.

In this embodiment of this application, carrier signals of different frequencies are sent to the antennas through the transceiver lines, and carrier signals of at least two frequencies on each transceiver line are separated through the combiner unit, so that a combination loss in the sending process can be reduced, and a signal gain in the receiving process can be improved.

The solution provided in this embodiment of this application may be applicable to a single-polarization scenario, or may be applicable to a dual-polarization scenario. In the single-polarization scenario, each antenna corresponds to a transceiver line of one polarization type. For the single-polarization scenario, refer to FIG. 3 for understanding. That is, in the sending process, no polarization processing is performed on a carrier signal, and each antenna may correspond to one transceiver line.

In this embodiment of this application, in the dual-polarization scenario, each antenna corresponds to transceiver lines of two polarization types. The two polarization types may be that horizontal and vertical polarization processing is performed on a carrier signal, or may be that +45° or -45° polarization processing is performed on a carrier signal.

In the dual-polarization scenario, the plurality of transceiver lines are included in at least two line groups, where each line group includes at least two transceiver lines respectively, and the at least two transceiver lines in a same line group share a combiner unit. Transceiver lines in the same line group are configured to send carrier signals of different frequencies in a same polarization direction, or receive carrier signals of at least two frequencies in a same polarization direction. Carrier signals on transceiver lines in different line groups have different polarization directions.

The at least two line groups include a first line group and a second line group. The first line group includes a first transceiver line, and the second line group includes a second transceiver line. A cross-polarization interference counteracter is arranged between a baseband of the first transceiver line and a baseband of the second transceiver line. An orthomode transducer is configured for antennas corresponding to the first transceiver line and the second transceiver line, the orthomode transducer is separately connected to the first transceiver line and the second transceiver line through a radio frequency cable, and a distance between the first transceiver line and the second transceiver line is greater than a first threshold. Carrier signals sent on the first transceiver line and the second transceiver line have a same frequency but different polarization directions. Carrier signals of at least two frequencies received on the first transceiver line and the second transceiver line have different polarization directions.

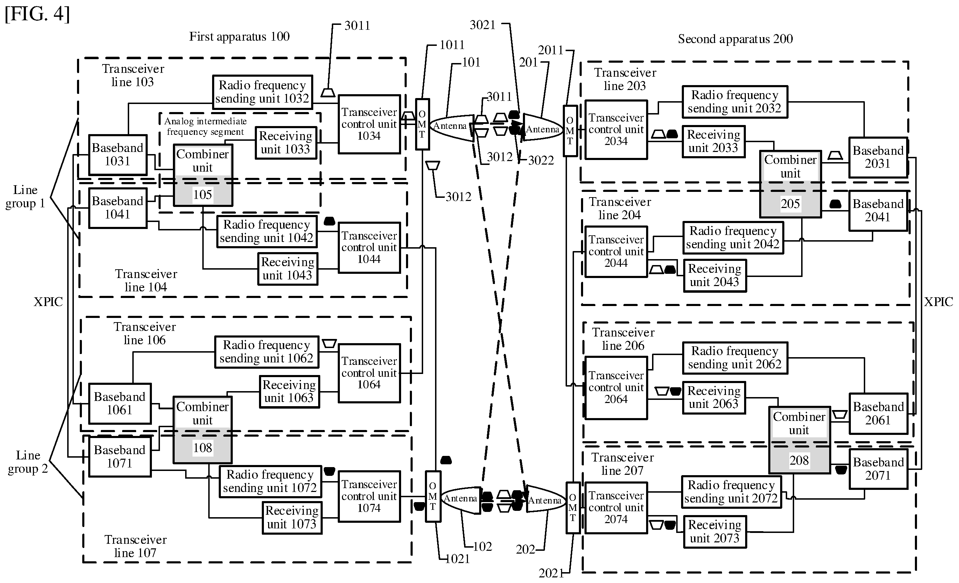

In this case, for structures and a communication process of microwave apparatuses in the dual-polarization scenario, refer to FIG. 4 below for understanding.

As shown in FIG. 4, the microwave communication system includes a first apparatus 100 and a second apparatus 200. The first apparatus 100 includes an antenna 101, an antenna 102, a line group 1, and a line group 2. The line group 1 includes a transceiver line 103 and a transceiver line 104, and the line group 2 includes a transceiver line 106 and a transceiver line 107. The transceiver line 103 and the transceiver line 104 share a combiner unit 105, and the transceiver line 106 and the transceiver line 107 share a combiner unit 108. A cross-polarization interference counteracter (cross-polarization interference counteracter, XPIC) is arranged between a baseband 1031 and a baseband 1061, and a cross-polarization interference counteracter is arranged between a baseband 1041 and a baseband 1071. In an architecture shown in FIG. 4, an orthomode transducer (orthomode transducer, OMT) 1011 is installed on the antenna 101, and the antenna 101 is connected to the transceiver line 103 and the transceiver line 106 through the orthomode transducer 1011 and a radio frequency cable. An orthomode transducer 1021 is installed on the antenna 102, and the antenna 102 is connected to the transceiver line 104 and the transceiver line 107 through the orthomode transducer 1021 and a radio frequency cable. To reduce multipath impact, a distance between the antenna 101 and the antenna 102 is generally large, for example, greater than 10 meters. Therefore, the radio frequency cable connecting the antenna 101 to the transceiver line 106 and the radio frequency cable connecting the antenna 102 to the transceiver line 104 are generally long.

Similarly, four transceiver lines of the second apparatus 200 are also shown in FIG. 4. A transceiver line 203 and a transceiver line 204 belong to a line group and share a combiner unit 205. A transceiver line 206 and a transceiver line 207 belong to a line group, and share a combiner unit 208. A cross-polarization interference counteracter is arranged between a baseband 2031 and a baseband 2061, and a cross-polarization interference counteracter is arranged between a baseband 2041 and a baseband 2071. An orthomode transducer 2011 is installed on an antenna 201, and the antenna 201 is connected to the transceiver line 203 and the transceiver line 206 through the orthomode transducer 2011 and a radio frequency cable. An orthomode transducer 2021 is installed on an antenna 202, and the antenna 202 is connected to the transceiver line 204 and the transceiver line 207 through the orthomode transducer 2021 and a radio frequency cable. The radio frequency cable connecting the antenna 201 to the transceiver line 206 and the radio frequency cable connecting the antenna 202 to the transceiver line 204 are generally long, for example, longer than 10 meters.

For units included on each transceiver line and connection relationships of the units, refer to descriptions in FIG. 3, and refer to FIG. 4 for understanding. Details are not described herein again.

In the foregoing dual-polarization scenario, a process of sending and receiving a carrier signal may be as follows:
The baseband 1031 processes a carrier signal 301 of a first frequency into a carrier signal 3011 in a first direction (for example, a horizontal direction), and the baseband 1061 processes the carrier signal 301 of the first frequency into a carrier signal 3012 in a second direction (for example, a vertical direction). Then, the carrier signal 3011 in the first direction is transmitted in the transceiver line 103, and is transmitted to the orthomode transducer 1011 through a short radio frequency cable; and the carrier signal 3012 in the second direction is transmitted in the transceiver line 106, and is transmitted to the orthomode transducer 1011 through a long radio frequency cable. Then, the antenna 101 sends the carrier signal 3011 of the first frequency in the first direction and the carrier signal 3012 of the first frequency in the second direction.

Similarly, the baseband 1041 processes a carrier signal 302 of a second frequency into a carrier signal 3021 in the first direction (for example, the horizontal direction), and the baseband 1071 processes the carrier signal 302 of the second frequency into a carrier signal 3022 in the second direction (for example, the vertical direction). Then, the carrier signal 3021 in the first direction is transmitted in the transceiver line 104, and is transmitted to the orthomode transducer 1021 through a short radio frequency cable; and the carrier signal 3022 in the second direction is transmitted in the transceiver line 107, and is transmitted to the orthomode transducer 1021 through a long radio frequency cable. Then, the antenna 102 sends the carrier signal 3021 of the second frequency in the first direction and the carrier signal 3022 of the second frequency in the second direction.

Correspondingly, both the antenna 201 and the antenna 202 of the second apparatus receive four carrier signals: the carrier signal 3011 of the first frequency in the first direction, the carrier signal 3012 of the first frequency in the second direction, the carrier signal 3021 of the second frequency in the first direction, and the carrier signal 3022 of the second frequency in the second direction respectively.

The orthomode transducer 2011 corresponding to the antenna 201 transmits the carrier signal 3011 of the first frequency in the first direction and the carrier signal 3021 of the second frequency in the first direction to the transceiver line 203, and transmits the carrier signal 3012 of the first frequency in the second direction and the carrier signal 3022 of the second frequency in the second direction to the transceiver line 206.

The orthomode transducer 2021 corresponding to the antenna 202 transmits the carrier signal 3011 of the first frequency in the first direction and the carrier signal 3021 of the second frequency in the first direction to the transceiver line 204, and transmits the carrier signal 3012 of the first frequency in the second direction and the carrier signal 3022 of the second frequency in the second direction to the transceiver line 207.

The combiner unit 205 separates the carrier signal 3011 of the first frequency in the first direction and the carrier signal 3021 of the second frequency in the first direction on the transceiver line 203 and the transceiver line 204. The baseband 2031 demodulates the carrier signal 3011, and the baseband 2041 demodulates the carrier signal 3021.

The combiner unit 208 separates the carrier signal 3012 of the first frequency in the second direction and the carrier signal 3022 of the second frequency in the second direction on the transceiver line 206 and the transceiver line 207. The baseband 2061 demodulates the carrier signal 3012, and the baseband 2071 demodulates the carrier signal 3022.

Each transceiver line includes a radio frequency segment, an analog intermediate frequency segment, and a digital baseband segment. The radio frequency segment refers to a location close to a location that is close to an antenna and that is in a radio frequency band, and for example, a transceiver control unit may be located in the radio frequency segment; the analog intermediate frequency segment refers to a band in which a carrier signal is in an analog state; and the digital baseband segment refers to a baseband location. The combiner unit may be located in the analog intermediate frequency segment, or may be located in the digital baseband segment. As shown in FIG. 4, the combiner unit is located in the analog intermediate frequency segment.

The foregoing describes a communication process in which the first apparatus 100 is used as a transmit end and the second apparatus 200 is used as a receive end. On the contrary, if the second apparatus 200 is used as a transmit end and the first apparatus 100 is used as a receive end, refer to the foregoing process, but a sending process occurs in the second apparatus 200, and a receiving process occurs in the first apparatus 100.

In this embodiment of this application, carrier signals of different frequencies and in different polarization directions are sent to the antennas through the transceiver lines, and carrier signals of at least two frequencies in a polarization direction on each transceiver line are separated through the combiner unit, so that a combination loss in the sending process can be reduced, and a signal gain in the receiving process can be improved.

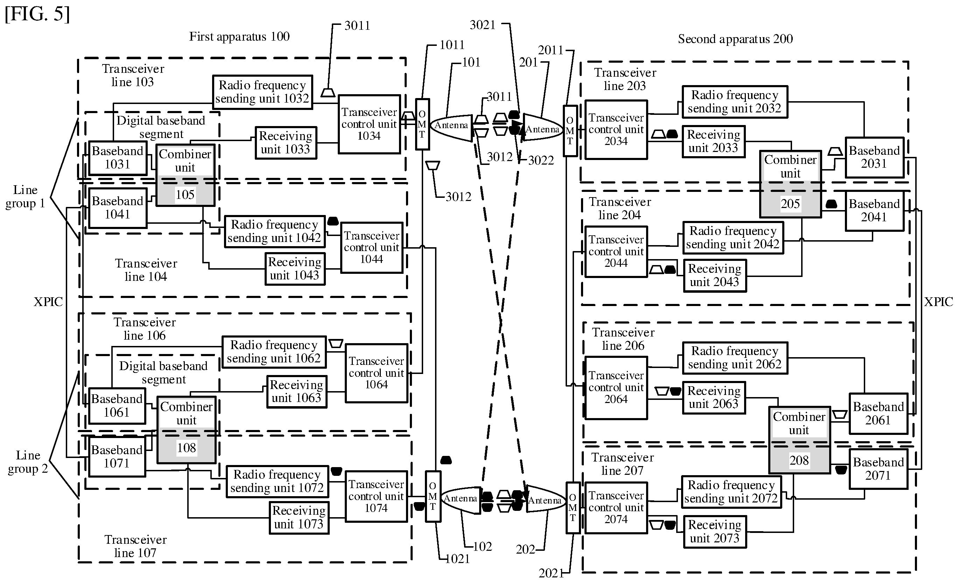

For the foregoing dual-polarization scenario, further refer to structures and a communication process of microwave apparatuses shown in FIG. 5 for understanding.

As shown in FIG. 5, a microwave communication system and the microwave apparatuses shown in FIG. 5 are basically the same as those shown in FIG. 4, and a difference lies in that the combiner unit is located in the digital baseband segment. For example, in FIG. 5, the combiner unit 105, the baseband 1031, and the baseband 1041 are all located in the digital baseband segment. The combiner unit 108, the baseband 1061, and the baseband 1071 are all located in the digital baseband segment. When the combiner unit is located in the digital baseband segment, difficulty in implementing an analog circuit can be reduced.

Considering that a radio frequency cable not only has high costs, but also causes an insertion loss to a signal, based on this, an embodiment of this application further provides microwave apparatuses of another structure and a microwave communication system. The microwave apparatus in the microwave communication system includes a plurality of antennas and a plurality of transceiver lines. The plurality of transceiver lines are included in at least two line groups, where each line group includes at least two transceiver lines, and at least two transceiver lines in different line groups share a combiner unit. Different transceiver lines in a same line group are configured to send carrier signals of a same frequency in different polarization directions, or receive carrier signals of at least two frequencies in different polarization directions.

The at least two line groups include a third line group and a fourth line group, the third line group includes a third transceiver line and a fourth transceiver line, and the fourth line group includes a fifth transceiver line. A cross-polarization interference counteracter is arranged between a baseband of the third transceiver line and a baseband of the fifth transceiver line. An orthomode transducer is configured for antennas corresponding to the third transceiver line and the fourth transceiver line, the orthomode transducer is connected to the third transceiver line and the fourth transceiver line through a radio frequency cable, and a distance between the third transceiver line and the fourth transceiver line is less than a second threshold. A combiner unit in the third line group is connected the baseband of the third transceiver line and a baseband of the fourth transceiver line, and is connected to a receiving unit of the third transceiver line and a receiving unit of the fifth transceiver line through an intermediate frequency cable or a digital cable. The combiner unit in the third line group is configured to separate carrier signals of at least two frequencies in a same polarization direction that are received by the third transceiver line, and separate carrier signals of at least two frequencies in a same polarization direction that are received by the fifth transceiver line. A polarization direction of the carrier signals of the at least two frequencies that are received by the third transceiver line is the same as a polarization direction of the carrier signals of the at least two frequencies that are received by the fifth transceiver line.

In this embodiment of this application, the distance between the third transceiver line and the fourth transceiver line is less than the second threshold, so that usage of the radio frequency cable can be reduced. The receiving unit of the third transceiver line and the receiving unit of the fifth transceiver line are connected through the intermediate frequency cable or the digital cable, so that carrier signals of a same frequency in different polarization directions may also be transmitted to a same antenna, and no radio frequency cable is required for mutual transmission, thereby reducing the usage of the radio frequency cable and reducing an insertion loss caused by using a long radio frequency cable.

In this embodiment of this application, the second threshold is far less than the first threshold. For example, the first threshold may be 10 meters, and the second threshold may be 0.5 meters. Therefore, compared with the microwave apparatuses shown in FIG. 4 and FIG. 5, in the microwave apparatuses of this structure the usage of the radio frequency cable is greatly reduced.

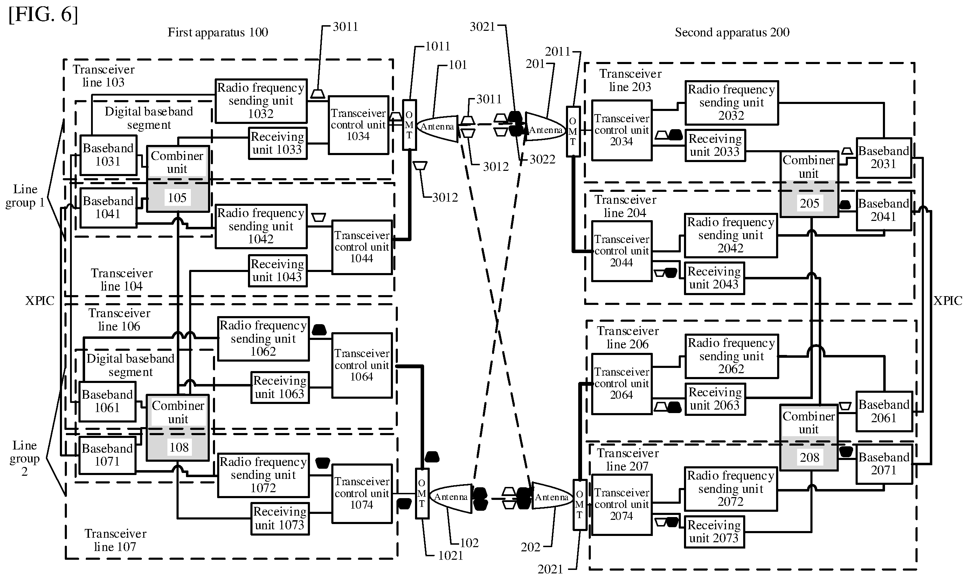

In this case, for the microwave apparatuses and a communication process, refer to FIG. 6 for understanding.

As shown in FIG. 6, for a structure of the microwave apparatuses, refer to the descriptions in FIG. 4 or FIG. 5 for understanding. Differences lie in that: The antenna 101 is connected to the transceiver line 103 and the transceiver line 104, and the antenna 102 is connected to the transceiver line 106 and the transceiver line 107. The antenna 201 is connected to the transceiver line 203 and the transceiver line 204, and the antenna 202 is connected to the transceiver line 206 and the transceiver line 207. A distance between transceiver lines in a same line group is short. Therefore, only a short radio frequency cable is required for a connection to a corresponding transceiver line.

The combiner unit 105 is shared by the transceiver line 103 and the transceiver line 106, and the combiner unit 108 is shared by the transceiver line 104 and the transceiver line 107. The combiner unit 205 is shared by the transceiver line 203 and the transceiver line 206, and the combiner unit 208 is shared by the transceiver line 204 and the transceiver line 207. A combiner unit is connected to a transceiver line through an intermediate frequency cable or a digital cable. Costs of the intermediate frequency cable or the digital cable are much lower than costs of the radio frequency cable.

Based on the structure shown in FIG. 6, in the dual-polarization scenario, a process of sending and receiving a carrier signal may be as follows:
The baseband 1031 processes a carrier signal 301 of a first frequency into a carrier signal 3011 in a first direction (for example, a horizontal direction), and the baseband 1041 processes the carrier signal 301 of the first frequency into a carrier signal 3012 in a second direction (for example, a vertical direction). Then, the carrier signal 3011 in the first direction is transmitted in the transceiver line 103, and is transmitted to the orthomode transducer 1011 through a short radio frequency cable; and the carrier signal 3012 in the second direction is transmitted in the transceiver line 104, and is transmitted to the orthomode transducer 1011 through a short radio frequency cable. Then, the antenna 101 sends the carrier signal 3011 of the first frequency in the first direction and the carrier signal 3012 of the first frequency in the second direction.

Similarly, the baseband 1061 processes a carrier signal 302 of a second frequency into a carrier signal 3021 in the first direction (for example, the horizontal direction), and the baseband 1071 processes the carrier signal 302 of the second frequency into a carrier signal 3022 in the second direction (for example, the vertical direction). Then, the carrier signal 3021 in the first direction is transmitted in the transceiver line 106, and is transmitted to the orthomode transducer 1021 through a short radio frequency cable; and the carrier signal 3022 in the second direction is transmitted in the transceiver line 107, and is transmitted to the orthomode transducer 1021 through a short radio frequency cable. Then, the antenna 102 sends the carrier signal 3021 of the second frequency in the first direction and the carrier signal 3022 of the second frequency in the second direction.

Correspondingly, both the antenna 201 and the antenna 202 of the second apparatus receive four carrier signals: the carrier signal 3011 of the first frequency in the first direction, the carrier signal 3012 of the first frequency in the second direction, the carrier signal 3021 of the second frequency in the first direction, and the carrier signal 3022 of the second frequency in the second direction respectively.

The orthomode transducer 2011 corresponding to the antenna 201 transmits the carrier signal 3011 of the first frequency in the first direction and the carrier signal 3021 of the second frequency in the first direction to the transceiver line 203, and transmits the carrier signal 3012 of the first frequency in the second direction and the carrier signal 3022 of the second frequency in the second direction to the transceiver line 204.

The orthomode transducer 2021 corresponding to the antenna 202 transmits the carrier signal 3011 of the first frequency in the first direction and the carrier signal 3021 of the second frequency in the first direction to the transceiver line 206, and transmits the carrier signal 3012 of the first frequency in the second direction and the carrier signal 3022 of the second frequency in the second direction to the transceiver line 207.

The combiner unit 205 separates the carrier signal 3011 of the first frequency in the first direction and the carrier signal 3021 of the second frequency in the first direction on the transceiver line 203 and the transceiver line 206. The baseband 2031 demodulates the carrier signal 3011, and the baseband 2041 demodulates the carrier signal 3021.

The combiner unit 208 separates the carrier signal 3012 of the first frequency in the second direction and the carrier signal 3022 of the second frequency in the second direction on the transceiver line 204 and the transceiver line 207. The baseband 2061 demodulates the carrier signal 3012, and the baseband 2071 demodulates the carrier signal 3022.

The combiner unit in FIG. 6 is located in the digital baseband segment. Actually, the combiner unit may alternatively be located in the analog intermediate frequency segment. This is not limited in this application.

The foregoing describes a communication process in which the first apparatus 100 is used as a transmit end and the second apparatus 200 is used as a receive end. On the contrary, if the second apparatus 200 is used as a transmit end and the first apparatus 100 is used as a receive end, refer to the foregoing process, but a sending process occurs in the second apparatus 200, and a receiving process occurs in the first apparatus 100.

In this embodiment of this application, in a process of reducing a combination loss in the sending process and improving a signal gain in the receiving process, usage of the radio frequency cable may be further reduced, and an insertion loss caused by using a long radio frequency cable is also reduced.

In an implementation of this application, the baseband, the combiner unit, the radio frequency sending unit, the receiving unit, and the transceiver control unit in the transceiver line may be implemented through a circuit, or may be implemented through software control. If the foregoing units are implemented through software control, a control parameter may be configured in a processor of the microwave apparatus. During initialization, the processor may configure, based on the control parameter, functions of the baseband, the combiner unit, the radio frequency sending unit, the receiving unit, and the transceiver control unit in the transceiver line, so as to perform functions performed by the units in the foregoing embodiments.

All or some of the foregoing embodiments may be implemented by using software, hardware, firmware, or any combination thereof. When software is used to implement the foregoing embodiments, all or some of the foregoing embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

## Claims

1. A microwave communication system, comprising a first apparatus and a second apparatus, wherein the first apparatus comprises a plurality of antennas, and the second apparatus comprises a plurality of antennas;
the first apparatus is configured to send carrier signals of at least two frequencies through at least two antennas of the plurality of antennas, and each of the at least two antennas corresponds to a carrier signal of at least one frequency; and
the second apparatus is configured to receive the carrier signals of the at least two frequencies through at least two antennas of the plurality of antennas, and each of the at least two antennas receives the carrier signals of the at least two frequencies.

2. The microwave communication system according to claim 1, wherein the first apparatus and the second apparatus further comprise a plurality of transceiver lines, at least two transceiver lines of the plurality of transceiver lines share a combiner unit, each of the plurality of antennas corresponds to at least one transceiver line, the antenna is connected to the corresponding transceiver line, and the transceiver line is configured to send a carrier signal to the antenna or receive a carrier signal from the antenna;
each transceiver line is configured to send a carrier signal of a frequency, or receive the carrier signals of the at least two frequencies; and
the combiner unit is configured to separate the carrier signals of the at least two frequencies on a target transceiver line, wherein the target transceiver line is a transceiver line that shares the combiner unit.

3. The microwave communication system according to claim 2, wherein each transceiver line comprises a baseband, the shared combiner unit, a radio frequency sending unit, a receiving unit, and a transceiver control unit, wherein
the transceiver control unit is connected to an antenna corresponding to the transceiver line on which the transceiver control unit is located, the transceiver control unit is separately connected to the radio frequency sending unit and the receiving unit, and the transceiver control unit is configured to control the transceiver line for sending or receiving;
the combiner unit is separately connected to the baseband and the receiving unit on the transceiver line that shares the combiner unit; and
the baseband is connected to the radio frequency sending unit.

4. The microwave communication system according to claim 2 or 3, wherein in a single-polarization scenario, each antenna corresponds to a transceiver line of one polarization type.

5. The microwave communication system according to claim 2 or 3, wherein in a dual-polarization scenario, each antenna corresponds to transceiver lines of two polarization types.

6. The microwave communication system according to claim 5, wherein the plurality of transceiver lines are comprised in at least two line groups, wherein each line group comprises at least two transceiver lines respectively, and the at least two transceiver lines in a same line group share a combiner unit;
transceiver lines in the same line group are configured to send carrier signals of different frequencies in a same polarization direction, or receive carrier signals of at least two frequencies in a same polarization direction; and
carrier signals on transceiver lines in different line groups have different polarization directions.

7. The microwave communication system according to claim 6, wherein the at least two line groups comprise a first line group and a second line group, the first line group comprises a first transceiver line, and the second line group comprises a second transceiver line, wherein
a cross-polarization interference counteracter is arranged between a baseband of the first transceiver line and a baseband of the second transceiver line;
an orthomode transducer is configured for antennas corresponding to the first transceiver line and the second transceiver line, the orthomode transducer is separately connected to the first transceiver line and the second transceiver line through a radio frequency cable, and a distance between the first transceiver line and the second transceiver line is greater than a first threshold;
carrier signals sent on the first transceiver line and the second transceiver line have a same frequency but different polarization directions; and
carrier signals of at least two frequencies received on the first transceiver line and the second transceiver line have different polarization directions.

8. The microwave communication system according to claim 5, wherein the plurality of transceiver lines are comprised in at least two line groups, wherein each line group comprises at least two transceiver lines respectively, and at least two transceiver lines in different line groups share a combiner unit; and
different transceiver lines in a same line group are configured to send carrier signals of a same frequency in different polarization directions, or receive carrier signals of at least two frequencies in different polarization directions.

9. The microwave communication system according to claim 8, wherein the at least two line groups comprise a third line group and a fourth line group, the third line group comprises a third transceiver line and a fourth transceiver line, and the fourth line group comprises a fifth transceiver line, wherein
a cross-polarization interference counteracter is arranged between a baseband of the third transceiver line and a baseband of the fifth transceiver line;
an orthomode transducer is configured for antennas corresponding to the third transceiver line and the fourth transceiver line, the orthomode transducer is separately connected to the third transceiver line and the fourth transceiver line through a radio frequency cable, and a distance between the third transceiver line and the fourth transceiver line is less than a second threshold;
a combiner unit in the third line group is connected to the baseband of the third transceiver line and a baseband of the fourth transceiver line, and is connected to a receiving unit of the third transceiver line and a receiving unit of the fifth transceiver line through an intermediate frequency cable or a digital cable; and
the combiner unit in the third line group is configured to separate carrier signals of at least two frequencies in a same polarization direction that are received by the third transceiver line, and separate carrier signals of at least two frequencies in a same polarization direction that are received by the fifth transceiver line, wherein a polarization direction of the carrier signals of the at least two frequencies that are received by the third transceiver line is the same as a polarization direction of the carrier signals of the at least two frequencies that are received by the fifth transceiver line.

10. The microwave communication system according to any one of claims 6 to 9, wherein each transceiver line comprises a radio frequency segment, an analog intermediate frequency segment, and a digital baseband segment, and the combiner unit is located in the analog intermediate frequency segment or the digital baseband segment.

11. A microwave apparatus, comprising: a plurality of transceiver lines and a plurality of antennas, wherein each of the plurality of antennas corresponds to at least one transceiver line, the antenna is connected to the corresponding transceiver line, and the transceiver line is configured to send a carrier signal to the antenna or receive a carrier signal from the antenna;
when sending carrier signals, at least two antennas of the plurality of antennas send carrier signals of at least two frequencies, and each of the at least two antennas corresponds to a carrier signal of at least one frequency; and
when receiving carrier signals, at least two antennas of the plurality of antennas receives the carrier signals of the at least two frequencies, and each of the at least two antennas receives the carrier signals of the at least two frequencies.

12. The apparatus according to claim 11, wherein at least two transceiver lines of the plurality of transceiver lines share a combiner unit, each of the plurality of antennas corresponds to at least one transceiver line, and the antenna is connected to the corresponding transceiver line;
each transceiver line is configured to send a carrier signal of a frequency, or receive the carrier signals of the at least two frequencies; and
the combiner unit is configured to separate the carrier signals of the at least two frequencies on a target transceiver line, wherein the target transceiver line is a transceiver line that shares the combiner unit.

13. The apparatus according to claim 12, wherein each transceiver line comprises a baseband, the shared combiner unit, a radio frequency sending unit, a receiving unit, and a transceiver control unit, wherein
the transceiver control unit is connected to an antenna corresponding to the transceiver line on which the transceiver control unit is located, the transceiver control unit is separately connected to the radio frequency sending unit and the receiving unit, and the transceiver control unit is configured to control the transceiver line for sending or receiving;
the combiner unit is separately connected to the baseband and the receiving unit on the transceiver line that shares the combiner unit; and
the baseband is connected to the radio frequency sending unit.

14. The apparatus according to claim 12 or 13, wherein in a single-polarization scenario, each antenna corresponds to a transceiver line of one polarization type.

15. The apparatus according to claim 12 or 13, wherein in a dual-polarization scenario, each antenna corresponds to transceiver lines of two polarization types.

16. The apparatus according to claim 15, wherein the plurality of transceiver lines are comprised in at least two line groups, wherein each line group comprises at least two transceiver lines respectively, and the at least two transceiver lines in a same line group share a combiner unit;
transceiver lines in the same line group are configured to send carrier signals of different frequencies in a same polarization direction, or receive carrier signals of at least two frequencies in a same polarization direction; and
carrier signals on transceiver lines in different line groups have different polarization directions.

17. The apparatus according to claim 16, wherein the at least two line groups comprise a first line group and a second line group, the first line group comprises a first transceiver line, and the second line group comprises a second transceiver line, wherein
a cross-polarization interference counteracter is arranged between a baseband of the first transceiver line and a baseband of the second transceiver line;
an orthomode transducer is configured for antennas corresponding to the first transceiver line and the second transceiver line, the orthomode transducer is separately connected to the first transceiver line and the second transceiver line through a radio frequency cable, and a distance between the first transceiver line and the second transceiver line is greater than a first threshold;
carrier signals sent on the first transceiver line and the second transceiver line have a same frequency but different polarization directions; and
carrier signals of at least two frequencies received on the first transceiver line and the second transceiver line have different polarization directions.

18. The apparatus according to claim 15, wherein the plurality of transceiver lines are comprised in at least two line groups, wherein each line group comprises at least two transceiver lines respectively, and at least two transceiver lines in different line groups share a combiner unit; and
different transceiver lines in a same line group are configured to send carrier signals of a same frequency in different polarization directions, or receive carrier signals of at least two frequencies in different polarization directions.

19. The apparatus according to claim 18, wherein the at least two line groups comprise a third line group and a fourth line group, the third line group comprises a third transceiver line and a fourth transceiver line, and the fourth line group comprises a fifth transceiver line, wherein
a cross-polarization interference counteracter is arranged between a baseband of the third transceiver line and a baseband of the fifth transceiver line;
an orthomode transducer is configured for antennas corresponding to the third transceiver line and the fourth transceiver line, the orthomode transducer is separately connected to the third transceiver line and the fourth transceiver line through a radio frequency cable, and a distance between the third transceiver line and the fourth transceiver line is less than a second threshold;
a combiner unit in the third line group is connected to the baseband of the third transceiver line and a baseband of the fourth transceiver line, and is connected to a receiving unit of the third transceiver line and a receiving unit of the fifth transceiver line through an intermediate frequency cable or a digital cable; and
the combiner unit in the third line group is configured to separate carrier signals of at least two frequencies in a same polarization direction that are received by the third transceiver line, and separate carrier signals of at least two frequencies in a same polarization direction that are received by the fifth transceiver line, wherein a polarization direction of the carrier signals of the at least two frequencies that are received by the third transceiver line is the same as a polarization direction of the carrier signals of the at least two frequencies that are received by the fifth transceiver line.

20. The apparatus according to any one of claims 16 to 19, wherein each transceiver line comprises a radio frequency segment, an analog intermediate frequency segment, and a digital baseband segment, and the combiner unit is located in the analog intermediate frequency segment or the digital baseband segment.
